# EUROPEAN PATENT APPLICATION

(11) **EP 4 300 232 A1**
(43) Date of publication of application: **03.01.2024**
(21) Application number: 21928100.3
(22) Date of filing: 17.12.2021
(51) Int. Cl.: G05B 23/02

(54) **INFORMATION PROCESSING DEVICE, INFORMATION PROCESSING PROGRAM, AND INFORMATION PROCESSING METHOD**

(30) Priority: 24.02.2021 JP 2021027259
(71) Applicant: OMRON Corporation, Kyoto 600-8530 (JP)
(72) Inventor: TSUCHIKAWA, Kento, Kyoto-shi, Kyoto 600-8530 (JP); KAWANOUE, Shinsuke, Kyoto-shi, Kyoto 600-8530 (JP); MIYAMOTO, Kota, Kyoto-shi, Kyoto 600-8530 (JP)
(74) Representative: Mewburn Ellis LLP
(86) International application number: PCT/JP2021/046792
(87) International publication number: WO 2022/181007

(57) **Abstract**

A control device includes a trained model for receiving a feature amount calculated from information collected from the control target to output a score, and a threshold value for determining the score. An information processing device includes: display means configured to display a feature amount related to the trained model and a score calculated from the feature amount; receiving means configured to receive setting of a threshold value for any of the feature amount and the score; calculation means configured to calculate a threshold value for the score from the threshold value set for the feature amount; and output means configured to output, as a threshold value to be applied to the trained model, any of the threshold value set for the score and the threshold value for the score calculated from the threshold value set for the feature amount.

## Description

### TECHNICAL FIELD

The present technology relates to an information processing device connected to a control device, an information processing program, and an information processing method.

### BACKGROUND ART

In various production sites, there is a need to improve a facility operation rate by predictive maintenance of machines and devices. Predictive maintenance means a maintenance form in which maintenance work such as maintenance or replacement is performed before some kind of anomaly occurring in a machine or a device is detected and equipment needs to be stopped. In order to realize such predictive maintenance, a mechanism using machine learning that collects state values of a machine or a device and determines whether or not any anomaly occurs in the machine or the device on the basis of the collected state values has been put into practical use.

For example, Japanese Patent Laying-Open No. 2012-138044 (PTL 1) discloses a process condition monitoring device that supports quick anomaly diagnosis of a monitoring target.

### CITATION LIST

### PATENT LITERATURE

PTL 1: Japanese Patent Laying-Open No. 2012-138044

### SUMMARY OF INVENTION

### TECHNICAL PROBLEM

As a typical method of detecting anomaly, there is a method of determining a measured value using a predetermined threshold value.

Normally, a frequency at which anomaly of a detection target can occur is low, and a threshold value has to be set as an initial value on the basis only of data to which a normal label is given or on the basis of data to which a slight abnormal label is given. Therefore, it is not easy even for an expert having specialized knowledge to set an appropriate threshold value.

The present technology provides a method capable of facilitating setting of a threshold value for determining a certain event using a trained model.

### SOLUTION TO PROBLEM

According to an example of the present technology, information processing device connected to a control device configured to control a control target is provided. The control device includes a trained model for receiving a feature amount calculated from information collected from the control target to output a score, and a threshold value for determining the score. The information processing device includes: display means configured to display a feature amount related to the trained model and a score calculated from the feature amount; receiving means configured to receive setting of a threshold value for any of the feature amount and the score; calculation means configured to calculate a threshold value for the score from the threshold value set for the feature amount; and output means configured to output, as a threshold value to be applied to the trained model, any of the threshold value set for the score and the threshold value for the score calculated from the threshold value set for the feature amount.

According to this configuration, the user can set the threshold value either for the feature amount or the score while confirming the feature amount or the score. Therefore, it is possible to start operation of determination processing using the trained model by setting the threshold value for any of the feature amount and the score that the setting is facilitated.

The display means may display a time waveform of the feature amount and a time waveform of the score side by side. According to this configuration, since the user can confirm both the time waveform of the feature amount and the time waveform of the score, the setting of the threshold value can be further facilitated.

The calculation means may calculate the threshold value for the score from the threshold value set for the feature amount using a function defining the trained model. According to this configuration, the threshold value for the score can be calculated from the threshold value set for the feature amount according to the definition of the trained model.

The display means may display time waveforms of a plurality of feature amounts side by side. According to this configuration, since the user can confirm the plurality of feature amounts, the setting of the threshold value can be further facilitated.

The display means may plot and display each of the feature amounts, on two-dimensional coordinates associated with two feature amounts, and may display a threshold value for the score in a form of a contour line. According to this configuration, since a relationship between the two feature amounts and the score can be visually grasped, the setting of the threshold value can be further facilitated.

The display means may plot and display each of the feature amounts on three-dimensional coordinates associated with the three feature amounts, and display a coordinate point group corresponding to the set score. According to this configuration, since a relationship between the three feature amounts and the score can be visually grasped, the setting of the threshold value can be further facilitated.

The output means may output a plurality of threshold values. According to this configuration, it is possible to perform determination in a plurality of stages using the score calculated using the trained model.

According to another example of the present technology, an information processing program executed by a computer connected to a control device configured to control a control target is provided. The control device includes a trained model for receiving a feature amount calculated from information collected from the control target to output a score, and a threshold value for determining the score. The information processing program causes the computer to perform: displaying a feature amount related to the trained model and a score calculated from the feature amount; receiving setting of a threshold value for any of the feature amount and the score; calculating a threshold value for the score from the threshold value set for the feature amount; and outputting, as a threshold value to be applied to the trained model, any of the threshold value set for the score and the threshold value for the score calculated from the threshold value set for the feature amount.

According to still another example of the present technology, an information processing method executed by a computer connected to a control device configured to control a control target is provided. The control device includes a trained model for receiving a feature amount calculated from information collected from the control target to output a score, and a threshold value for determining the score. The information processing method comprising: displaying a feature amount related to the trained model and a score calculated from the feature amount; receiving setting of a threshold value for any of the feature amount and the score; calculating a threshold value for the score from the threshold value set for the feature amount; and outputting, as a threshold value to be applied to the trained model, any of the threshold value set for the score and the threshold value for the score calculated from the threshold value set for the feature amount.

### ADVANTAGEOUS EFFECTS OF INVENTION

According to the present technology, a method capable of facilitating setting of a threshold value for determining a certain event using a trained model is provided.

### BRIEF DESCRIPTION OF DRAWINGS

Fig. 1 is a schematic diagram illustrating an example of an overall configuration of a control system according to the present embodiment.
Fig. 2 is a diagram for illustration of a main configuration and an example of an operation mode of the control system according to the present embodiment.
Fig. 3 is a block diagram illustrating an example of a hardware configuration of a control device constituting the control system according to the present embodiment.
Fig. 4 is a block diagram illustrating an example of a hardware configuration of a support device constituting the control system according to the present embodiment.
Fig. 5 is a schematic diagram illustrating an outline of anomaly detection processing in the control system according to the present embodiment.
Fig. 6 is a diagram for illustration of an outline of threshold value setting processing provided by the support device constituting the control system according to the present embodiment.
Fig. 7 is a schematic diagram illustrating an example of a user interface screen related to the threshold value setting processing provided by the support device constituting the control system according to the present embodiment.
Fig. 8 is a schematic diagram illustrating another example of the user interface screen related to the threshold value setting processing provided by the support device constituting the control system according to the present embodiment.
Fig. 9 is a schematic diagram illustrating still another example of the user interface screen related to the threshold value setting processing provided by the support device constituting the control system according to the present embodiment.
Fig. 10 is a flowchart showing an example of a processing procedure related to the threshold value setting processing according to the present embodiment.
Fig. 11 is a block diagram illustrating an example of a functional configuration for realizing the threshold value setting processing according to the present embodiment.

### DESCRIPTION OF EMBODIMENTS

An embodiment of the present invention will be described in detail with reference to the drawings. The same or corresponding parts in the drawings are denoted by the same reference numerals, and the descriptions thereof will not be repeated.

### <A. Application example>

First, an example of a scene to which the present invention is applied will be described. Hereinafter, an example of determining whether or not any anomaly has occurred in equipment or the like will be described as an application example of machine learning. However, the present invention is not limited to anomaly detection and can be applied to arbitrary machine learning.

In the present specification, any device to which the control device is related is also referred to as "control target". The term "control target" is not limited to an arbitrary device directly controlled by the control device or a device from which the control device acquires information, but may include an arbitrary apparatus or facility including those devices, a unit constituting the control device, and the like.

In the present specification, as an example of an entity that performs processing such as determination, an anomaly detection engine reads a trained model generated by machine learning. One or more predetermined feature amounts are input to the anomaly detection engine, and an output is calculated based on the input feature amounts. A value calculated by the anomaly detection engine using the read trained model is also referred to as "score".

In the present specification, a specific event that can be determined by applying a trained model generated by machine learning is also referred to as "event". For a trained model related to anomaly detection, an event typically means occurrence of specific anomaly that can occur in a control target.

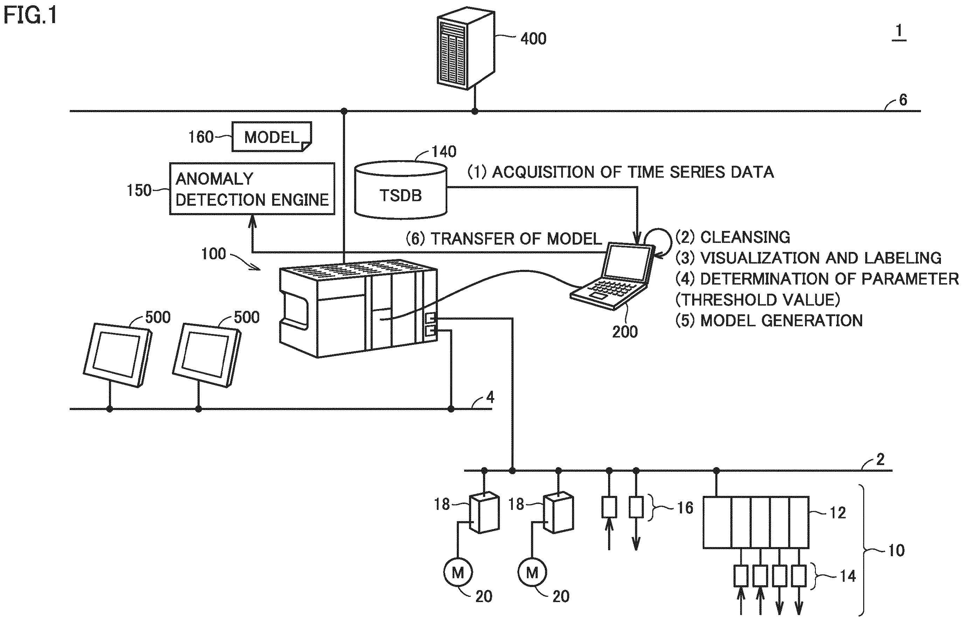

Fig. 1 is a schematic diagram illustrating an example of an overall configuration of a control system 1 according to the present embodiment. Referring to Fig. 1, control system 1 according to the present embodiment includes, as main components, a control device 100 for controlling a control target, and a support device 200 that is an example of an information processing device connected to control device 100.

Control device 100 may be embodied as a kind of computer such as a programmable logic controller (PLC). Control device 100 is connected to a field device group 10 via a field bus 2. Field bus 2 preferably adopts an industrial communication protocol. As such a communication protocol, EtherCAT (registered trademark), EtherNet/IP (registered trademark), DeviceNet (registered trademark), CompoNet (registered trademark), and the like are known.

Field device group 10 includes a device that collects input data from a control target or a manufacturing device, a production line, or the like that are related to control (hereinafter, also collectively referred to as "fields"). As a device that collects such input data, an input relay, various sensors, and the like are assumed. Field device group 10 further includes a device that gives some action to the field on the basis of a command generated by control device 100 (hereinafter, also referred to as "output data"). As a device that exerts some action on such a field, an output relay, a contactor, a servo driver, a servo motor, and other arbitrary actuators are assumed. Field device group 10 exchanges data including input data and output data with control device 100 via field bus 2.

In the example of the configuration illustrated in Fig. 1, field device group 10 includes a remote input/output (I/O) device 12, a relay group 14, a servo driver 18, and a servomotor 20.

Remote I/O device 12 includes a communication section that performs communication via field bus 2, and an input/output section (hereinafter, also referred to as "I/O unit") that collects input data and outputs output data. Through such an I/O unit, input data and output data are exchanged between control device 100 and the field. Fig. 1 illustrates an example in which digital signals are exchanged as input data and output data via relay group 14.

The I/O unit may be directly connected to the field bus. Fig. 1 illustrates an example in which an I/O unit 16 is directly connected to field bus 2.

Servo driver 18 drives servomotor 20 in accordance with output data from control device 100 (for example, a position command or the like).

As described above, the input data and the output data are exchanged between control device 100 and field device group 10 via field bus 2, and the exchanged data is updated in a very short cycle of several hundred µsec order to several tens of msec order. Note that such update processing of exchanged data may be referred to as "I/O refresh processing".

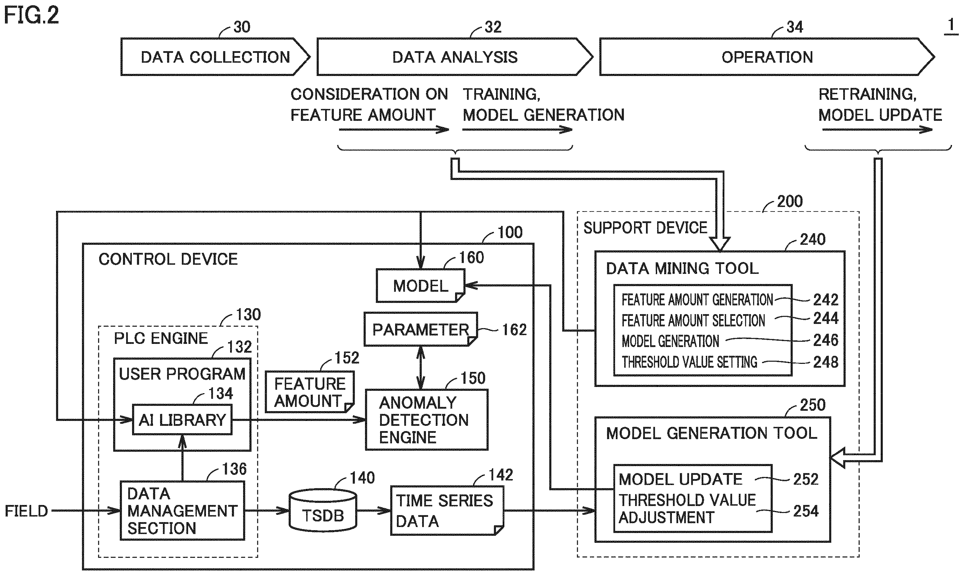

Control device 100 includes a PLC engine (a PLC engine 130 illustrated in Fig. 2) that executes control calculation for controlling a control target such as a facility or a machine. The PLC engine corresponds to a control calculation section, and determines data to be output by executing control calculation based on input data. Control device 100 includes a time series database (hereinafter, also referred to as "TSDB (time series data base)") 140 in which input data from field device group 10, output data to field device group 10, internal data managed inside control device 100, and the like are sequentially stored. Hereinafter, the data stored in TSDB 140 is also referred to as "time series data".

Control device 100 includes an anomaly detection engine 150 that reads a trained model (hereinafter, also simply referred to as "model 160") and a parameter 162 prepared in advance and detects anomaly in a control target.

A feature amount calculated from information collected from the control target is input to model 160, and a score is output from model 160. Basically, model 160 is prepared for each event. However, logics for respectively determining a plurality of events can be combined into one model.

Parameter 162 may include a threshold value for determining the score output from model 160.

Typically, time series data (or a feature amount calculated from the time series data) stored in TSDB 140 is used as the information collected from the control target. That is, anomaly detection engine 150 determines occurrence or possibility of the anomaly in the control target based on the time series data stored in TSDB 140.

Control device 100 may be connected to a server 400 via an upper network 6, or may be connected to one or more display devices 500 via a field bus 4. Note that server 400 and display device 500 are optional configurations, and are not essential configurations of control system 1.

Server 400 is in charge of processing of providing arbitrary information to control device 100 or collecting data from control device 100.

Display device 500 receives an operation from the user, transmits a command or the like corresponding to the user operation to control device 100, and graphically displays a calculation result or the like in control device 100.

Support device 200 is an information processing device (an example of a computer) that supports preparation necessary for control device 100 to control a control target. Specifically, support device 200 provides a development environment for a user program executed by control device 100 (program creation and editing tool, parser, compiler, and the like), a setting environment for setting parameters (configurations) of control device 100 and various devices connected to control device 100, a function of transmitting the generated user program to control device 100, a function of correcting and changing the user program executed on control device 100 online, and the like.

Support device 200 further includes a function of supporting generation and adjustment of model 160 which is referred to by anomaly detection engine 150 mounted on control device 100.

Here, something related to a target of anomaly detection may be any information that can be used to generate training data for training a detection logic (that is, model 160) of anomaly detection engine 150. For example, a work to be produced (a product or a semi-product), a production facility itself, and the like can be considered as the something related to a target of anomaly detection.

Next, an example of a configuration and an operation of anomaly detection engine 150 of control device 100 will be described. Support device 200 acquires the time series data stored in TSDB 140, and selects (cleanses) the time series data or the feature amount used for generating model 160. Support device 200 then visualizes the selected data and labels the selected data. Support device 200 further determines parameter 162 to be used with model 160. The determination of parameter 162 includes setting of a threshold value for the score or the feature amount. The threshold value may be manually set by the user, or may be automatically set on the basis of statistical information.

Finally, support device 200 generates model 160 based on the labeled data, and transfers generated model 160 and corresponding parameter 162 to control device 100. Model 160 transferred to control device 100 is a trained model. Parameter 162 including the threshold value and the like may be stored in control device 100 as a file separate from model 160, or parameter 162 may be incorporated into model 160.

Fig. 2 is a diagram for illustration of a main configuration and an example of an operation mode of control system 1 according to the present embodiment. Referring to Fig. 2, the anomaly detection processing in control system 1 is typically realized in order of a data collection phase 30, a data analysis phase 32, and an operating phase 34.

In data collection phase 30, time series data related to an anomaly detection target is collected. In data analysis phase 32, a feature amount suitable for intended anomaly detection is examined by data mining or the like on the time series data collected in data collection phase 30, and model 160 corresponding to the examined feature amount is generated. Operating phase 34 starts using model 160 generated in data analysis phase 32.

When insufficient detection or erroneous detection occurs after operating phase 34 starts, such as when anomaly to be detected is overlooked or anomaly that should not be detected is detected, model 160 may be updated by retraining. Alternatively, even in a case where some change occurs in the target of anomaly detection (for example, a change over time, a change in an operation condition, and the like), model 160 may be updated by retraining.

In consideration of such a processing procedure, support device 200 may include a data mining tool 240 and a model generation tool 250. Data mining tool 240 mainly provides necessary processing in data analysis phase 32. Model generation tool 250 mainly provides necessary processing in operating phase 34.

Data mining tool 240 typically provides a feature amount generation processing 242, a feature amount selection processing 244, a model generation processing 246, and a threshold value setting processing 248.

Model generation tool 250 provides a model update processing 252 and a threshold value adjustment processing 254.

On the other hand, control device 100 includes PLC engine 130, TSDB 140, and anomaly detection engine 150, as described above.

PLC engine 130 periodically executes control calculation defined by a user program 132 arbitrarily created according to a control target. In user program 132, an AI library 134 is available. Alternatively, AI library 134 may be incorporated in user program 132. Contents, characteristics, an operation, and the like of AI library 134 may be determined using data mining tool 240 in data analysis phase 32.

When PLC engine 130 executes a portion of AI library 134 included in user program 132, one or more feature amounts 152 are calculated from data designated in advance, and the calculated feature amount 152 is provided to anomaly detection engine 150.

PLC engine 130 includes a data management section 136, and holds input data, output data, and internal data in a form that can be referred by user program 132. The value of the data managed by data management section 136 is updated every predetermined cycle (I/O refresh cycle) by the I/O refresh processing. In addition, data designated in advance among the data managed by data management section 136 is stored in TSDB 140 every predetermined cycle. As a result, the value change of the designated data for each predetermined cycle, that is, time series data 142 is output from TSDB 140.

Anomaly detection engine 150 determines occurrence or possibility of the anomaly with reference to model 160 based on feature amount 152 from PLC engine 130. Model 160 may be determined using data mining tool 240 in data analysis phase 32, or may be determined using model generation tool 250 in operating phase 34.

Typically, model 160 is a function that outputs a value indicating an abnormal degree (degree of deviation from normal) when one or more feature amounts 152 are input. Model 160 may include coefficients that define a function that is an entity.

Control system 1 according to the present embodiment can output a report of information related to the machine learning, and by using such report output, the user can easily determine validity of the trained model and easily grasp a deterioration tendency of equipment, a tendency of a production situation, and the like.

### <B. Hardware configuration example>

Next, an example of a hardware configuration of the main devices constituting control system 1 according to the present embodiment will be described.

### (b1: Example of hardware configuration of control device 100)

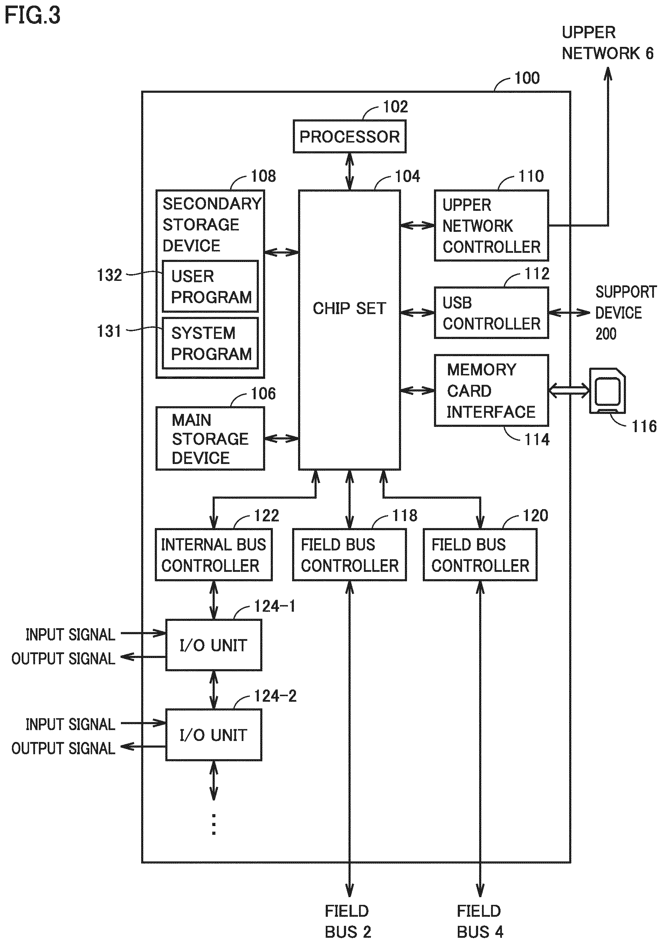

Fig. 3 is a block diagram illustrating an example of a hardware configuration of control device 100 constituting control system 1 according to the present embodiment. Referring to Fig. 3, control device 100 includes a processor 102 such as a central processing unit (CPU) or a micro-processing unit (MPU), a chip set 104, a main storage device 106, a secondary storage device 108, an upper network controller 110, a universal serial bus (USB) controller 112, a memory card interface 114, an internal bus controller 122, a field bus controller 118, 120, and I/O units 124 -1,124 -2, ....

Processor 102 reads various programs stored in secondary storage device 108, develops the programs in main storage device 106, and executes the programs to implement PLC engine 130 and anomaly detection engine 150. Chip set 104 controls data transmission and the like between processor 102 and each component.

Secondary storage device 108 stores a system program 131 for realizing PLC engine 130 and anomaly detection engine 150, and user program 132 executed using PLC engine 130. A partial region of secondary storage device 108 may be used as TSDB 140.

Upper network controller 110 controls data exchange with other devices via upper network 6. USB controller 112 controls data exchange with support device 200 via USB connection.

Memory card interface 114 is configured such that memory card 116 is detachable, and can write data to memory card 116 and read various data (such as the user program and trace data) from memory card 116.

Internal bus controller 122 is an interface that exchanges data with I/O units 124 -1,124 -2, ... mounted on control device 100.

Field bus controller 118 controls data exchange with other devices via field bus 2. Similarly, field bus controller 120 controls data exchange with other devices via field bus 4.

Although Fig. 3 illustrates the configuration example in which necessary functions are provided by processor 102 executing the program, some or all of these provided functions may be implemented using a dedicated hardware circuit (for example, an application specific integrated circuit (ASIC), a field-programmable gate array (FPGA), or the like). Alternatively, a main part of control device 100 may be realized by using hardware according to a general-purpose architecture (for example, an industrial personal computer based on a general-purpose personal computer). In this case, a plurality of operating systems (OSs) having different uses may be executed in parallel using a virtualization technology, and necessary applications may be executed on respective OSs.

### (b2: Hardware configuration of support device 200)

As one example, support device 200 according to the present embodiment is realized by executing a program using hardware according to a general-purpose architecture (for example, a general-purpose personal computer).

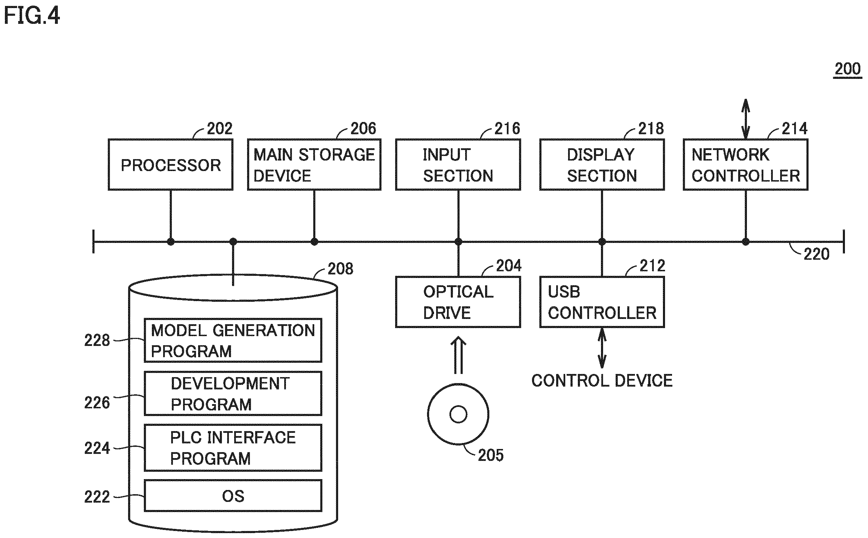

Fig. 4 is a block diagram illustrating an example of a hardware configuration of support device 200 constituting control system 1 according to the present embodiment. Referring to Fig. 4, support device 200 includes a processor 202 such as a CPU or an MPU, an optical drive 204, a main storage device 206, a secondary storage device 208, a USB controller 212, a network controller 214, an input section 216, and a display section 218. These components are connected via a bus 220.

Processor 202 reads various programs stored in secondary storage device 208, develops the programs in main storage device 206, and executes the programs to implement various processes including the threshold value setting processing as described later.

Secondary storage device 208 is constituted by a hard disk drive (HDD) or a flash solid state drive (SSD), for example. Secondary storage device 208 typically stores an OS 222, a PLC interface program 224 for exchanging data related to the anomaly detection function between and control device 100, a development program 226 for creating a user program executed in support device 200, debugging the created user program, defining a system configuration, setting various parameters, and the like, and a model generation program 228 for realizing generation of model 160 and related processing. Secondary storage device 208 may store a necessary program other than the programs illustrated in Fig. 4.

Support device 200 includes optical drive 204, and reads a computer-readable program stored in recording medium 205 (for example, an optical recording medium such as a digital versatile disc (DVD)) that non-transiently stores the program, and installs the program in secondary storage device 208 or the like.

Various programs executed by support device 200 may be installed via computer-readable recording medium 205, or may be installed by being downloaded from a server device or the like on a network. Functions provided by support device 200 according to the present embodiment may be realized by using a part of modules provided by OS 222.

USB controller 212 controls data exchange with control device 100 via USB connection. Network controller 214 controls data exchange with other devices via an arbitrary network.

Input section 216 includes a keyboard, a mouse, and the like, and receives a user operation. Display section 218 includes a display, various indicators, a printer, and the like, and outputs processing results and the like from processor 202.

Fig. 4 illustrates the configuration example in which necessary functions are provided by processor 202 executing the program. However, some or all of these provided functions may be implemented using a dedicated hardware circuit (for example, ASIC or FPGA).

### <C. threshold value setting processing>

Next, the threshold value setting processing according to the present embodiment will be described.

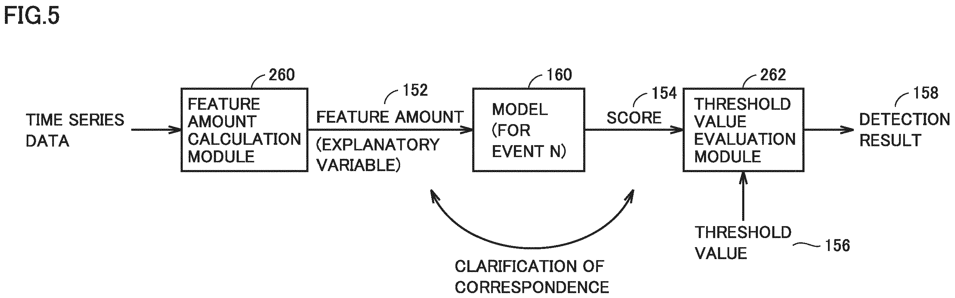

Fig. 5 is a schematic diagram illustrating an outline of anomaly detection processing in control system 1 according to the present embodiment. Referring to Fig. 5, a feature amount calculation module 260 calculates the corresponding feature amount 152 with respect to the input of the time series data.

Feature amount 152 is information calculated by an arbitrary method from information from a field (part of time series data). As feature amount 152, for example, an arbitrary value such as a maximum value, a minimum value, an intermediate value, an average value, or a standard deviation can be used. Note that the time series data as it is can also be used as the feature amount.

Calculated feature amount 152 is input to model 160, and a score 154 is calculated. Further, score 154 output from model 160 is compared to a threshold value 156 in a threshold value determination module 262. A detection result 158 including presence or absence of anomaly and the like is output according to a magnitude relationship between score 154 and threshold value 156.

Note that a plurality of feature amounts 152 may be input to model 160, and the number of dimensions of feature amounts 152 can also be arbitrarily set. Score 154 output from model 160 is typically a one-dimensional value, but may be a multidimensional value.

Control system 1 according to the present embodiment provides a mechanism for facilitating setting of threshold value 156 used for determination of score 154. Since the correspondence relationship between feature amount 152 input to model 160 and score 154 output from model 160 is definite, the threshold value set to feature amount 152 can be adjusted instead of threshold value 156 set to score 154.

Support device 200 displays a feature amount related to model 160 and a score calculated from the feature amount. Hereinafter, examples of the display of the feature amount and the score will be described.

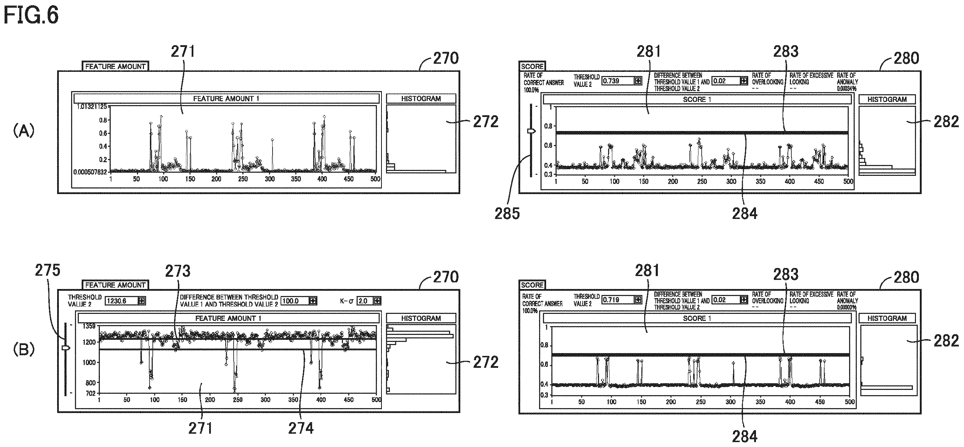

Fig. 6 is a diagram for illustration of an outline of threshold value setting processing provided by support device 200 constituting control system 1 according to the present embodiment. Referring to Fig. 6, support device 200 selectively or simultaneously displays, for selected model 160 (model 160 corresponding to any of the events), one of a feature amount display screen 270 showing a time waveform of one or more input feature amounts and a score display screen 280 showing a time waveform of an output score. That is, support device 200 may display the time waveform of the feature amount and the time waveform of the score side by side, or may display one of the time waveform of the feature amount and the time waveform of the score.

The user can set a threshold value used for determination on both feature amount display screen 270 and score display screen 280.

More specifically, feature amount display screen 270 includes a feature amount display region 271 and a histogram display region 272. A time waveform of the feature amount input to the selected model 160 is displayed in feature amount display region 271. In histogram display region 272, a distribution of time waveforms of the feature amount displayed in feature amount display region 271 is displayed.

Score display screen 280 includes a score display region 281 and a histogram display region 282. In score display region 281, a time waveform of the score output from selected model 160 is displayed. In histogram display region 282, a distribution of time waveforms of the score displayed in score display region 281 is displayed.

The time waveforms of the feature amount and the score are divided into predetermined time sections called frames, for example.

Fig. 6(A) illustrates an example in which the user sets a threshold value for the time waveform of the score. A slider 285 for setting a threshold value is displayed in score display screen 280 illustrated in Fig. 6(A). The user operates slider 285 to set a first threshold value 283 and a second threshold value 284 for the score. Support device 200 thus receives setting of a threshold value for the score.

Note that one or more threshold values may be provided. For example, first threshold value 283 may be set as a threshold value for determining that a damage has occurred, and second threshold value 284 may be set as a threshold value for determining caution indicating that the anomaly has progressed to some extent. In this case, a plurality of threshold values (first threshold value 283 and second threshold value 284) are also output as parameter 162.

Fig. 6(B) illustrates an example in which the user sets a threshold value for the time waveform of the feature amount. A slider 275 for setting a threshold value is displayed in feature amount display screen 270 illustrated in Fig. 6(B). The user operates slider 275 to set a first threshold value 273 and a second threshold value 274 for the feature amount. As described above, support device 200 thus receives setting of a threshold value for the feature amount.

Support device 200 calculates first threshold value 283 and second threshold value 284 for the score from first threshold value 273 and second threshold value 274 set by the user for the feature amount. First threshold value 283 and second threshold value 284 are calculated using a function that defines corresponding model 160.

It is assumed, for example, that model 160 for calculating a score for one or more feature amounts is a function f (feature amount 1, feature amount 2, ..., feature amount N) (N ≥ 1). At this time, the score can be expressed as score = f(feature amount 1, feature amount 2, ..., feature amount N). By using function f defining model 160, a threshold value TH_{sc} for the score can be calculated from a threshold value TH_{ch} set for the feature amount. That is, TH_{sc}=f(TH_{ch}) can be calculated. In this manner, by using function f defining model 160 (that is, model 160 itself), it is possible to uniquely calculate the threshold value for the score from the threshold value set for the feature amount.

In this manner, support device 200 calculates the threshold value for the score from the threshold value set for the feature amount. More specifically, support device 200 calculates threshold value TH_{sc} for the score from threshold value TH_{ch} set for the feature amount using the function defining model 160.

Note that a plurality of feature amounts may be input to model 160. In this case, a threshold value may be set for each of the feature amounts. At this time, a user interface screen shown below may be provided so that the user can intuitively understand the screen.

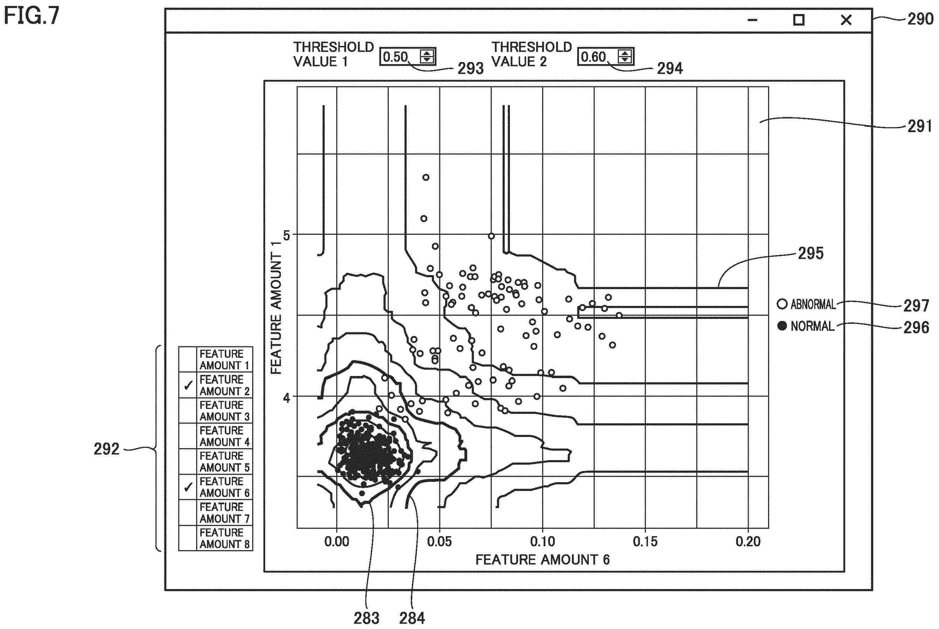

Fig. 7 is a schematic diagram illustrating an example of a user interface screen related to threshold value setting processing provided by support device 200 constituting control system 1 according to the present embodiment. Referring to Fig. 7, a user interface screen 290 expresses a relationship between any selected two feature amounts among a plurality of feature amounts input to model 160 and the score.

More specifically, user interface screen 290 includes a score display region 291. Score display region 291 expresses the relationship between any two feature amounts selected in the feature amount selection area 292 and the score in a form of a contour line. A contour line 295 displayed in score display region 291 connects feature amounts of a set for which the same score is calculated.

In each contour line 295 displayed in score display region 291, a set of feature amounts indicating the same score is extracted and generated by sequentially calculating the corresponding score by changing each selected feature amount.

In addition, in score display region 291, a feature amount 296 to which a normal label is given and a feature amount 297 to which an abnormal label is given are plotted. The user sets first threshold value 283 and second threshold value 284 for the score by inputting arbitrary values to a threshold value setting area 293 and a threshold value setting area 294 while referring to contour line 295, feature amount 296, and feature amount 297 displayed in score display region 291. As described above, when model 160 is configured to output a score from a plurality of feature amounts, support device 200 calculates the threshold value for the score from a threshold value set for each of the plurality of feature amounts.

First threshold value 283 and second threshold value 284 that have been set are reflected in the form of contour lines in score display region 291.

The user sets optimum first threshold value 283 and second threshold value 284 while comparing a range surrounded by the contour lines corresponding to first threshold value 283 and second threshold value 284 displayed in score display region 291 with feature amount 296 to which the normal label is given and feature amount 297 to which the abnormal label is given.

As described above, support device 200 plots and displays each of the feature amounts (feature amount 296 and feature amount 297) in the two-dimensional coordinates associated with the two feature amounts, and displays the threshold value for the score in the form of contour lines.

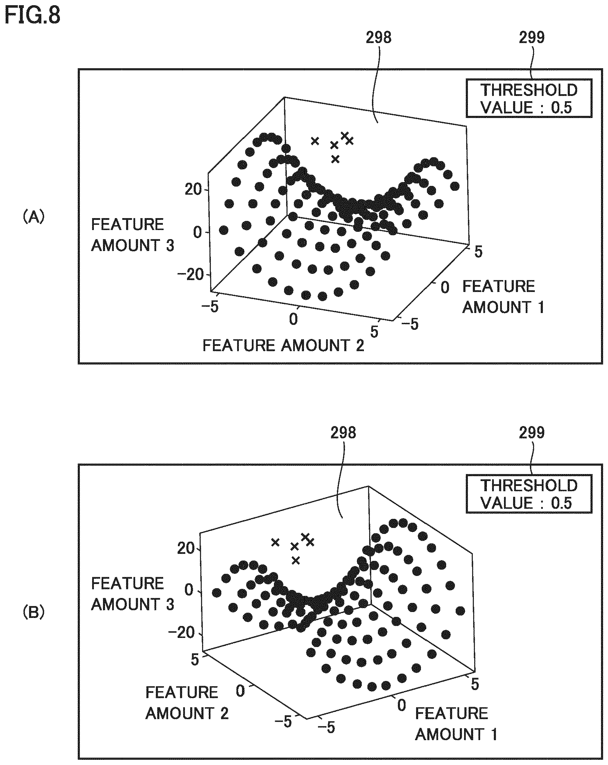

Fig. 8 is a schematic diagram illustrating another example of the user interface screen related to the threshold value setting processing provided by support device 200 constituting control system 1 according to the present embodiment. Fig. 8 illustrates an example in which three feature amounts are input to model 160 to calculate the score.

In a score display region 298 of Fig. 8, three-dimensional coordinates in which three feature amounts are associated are displayed. Since it is not possible to display a plurality of contour lines of the score in score display region 298 illustrated in Fig. 8, a boundary surface corresponding to the threshold value set in a threshold value setting area 299 is displayed in score display region 298.

Thus, support device 200 plots and displays each of the feature amounts on the three-dimensional coordinates associated with the three feature amounts, and displays the coordinate point group corresponding to the set score.

The curved surface provided by connecting plots (coordinate point groups) shown in score display region 298 in Fig. 8 is a boundary surface corresponding to the threshold value for the score set in threshold value setting area 299. The user can set the threshold value for the score while confirming the curved surface provided by connecting the plots. Support device 200 thus receives setting of a threshold value for the score.

Note that by a user operation on score display region 298 illustrated in Fig. 8(A), a display like score display region 298 illustrated in Fig. 8(B) is displayed. That is, a viewpoint for displaying score display region 298 may be arbitrarily changed by the user. By changing the viewpoint or rotating the display as described above, the user can determine whether or not the threshold value for the set score is appropriate.

In addition, a threshold value for the score may be set by setting a threshold value for an arbitrary feature amount among the plurality of feature amounts.

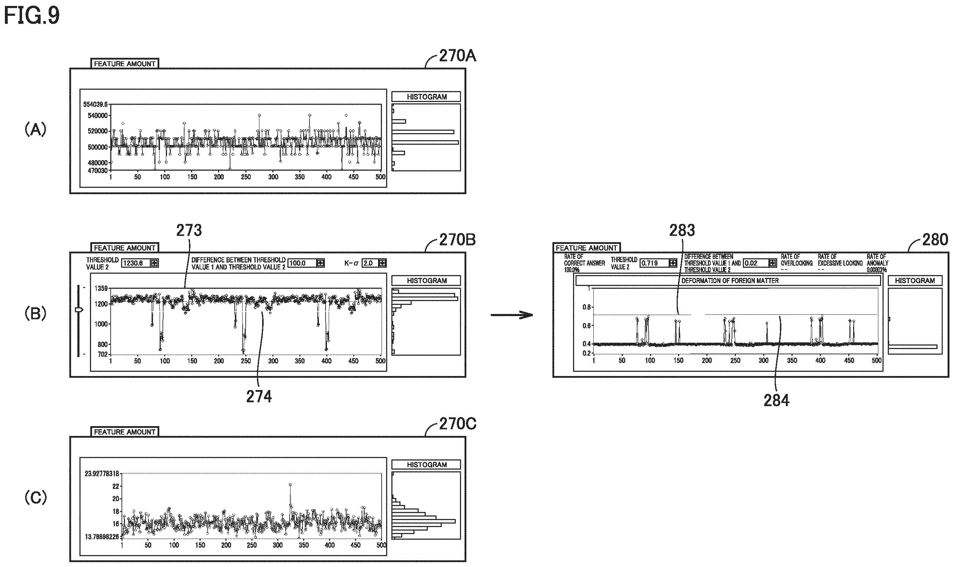

Fig. 9 is a schematic diagram illustrating still another example of the user interface screen related to the threshold value setting processing provided by support device 200 constituting control system 1 according to the present embodiment.

Referring to Fig. 9, a case where three feature amounts are input to model 160 is assumed. A feature amount display screen 270A, a feature amount display screen 270B, and a feature amount display screen 270C on which time waveforms of the respective feature amounts are respectively displayed side by side. The user selects a feature amount for which a threshold value is easily set by referring to the time waveform of each feature amount, and sets a desired threshold value.

In the example illustrated in Fig. 9, the user selects feature amount display screen 270B and operates slider 275 on feature amount display screen 270B to set first threshold value 273 and second threshold value 274 for the selected feature amount. Then, first threshold value 283 and second threshold value 284 for the score corresponding to first threshold value 273 and second threshold value 274 for the feature amount are calculated. On score display screen 280, first threshold value 283 and second threshold value 284 that have been calculated are displayed, in addition to the time waveform of the corresponding score.

Note that, for the feature amount for which the threshold value is not set, the threshold value for the score may be calculated using a provisionally determined threshold value using statistical data of the feature amount or the like.

In this manner, a threshold value for a corresponding score can be set by displaying the time waveforms of the plurality of feature amounts side by side, selecting a feature amount for which a threshold value can be easily set, and by setting a desired threshold value.

The threshold value set for the score or the threshold value for the score calculated from the threshold value set for the feature amount that has been set by the above procedure is output as a threshold value to be applied to model 160.

### <D. Processing procedure>

Next, an example of a processing procedure related to the threshold value setting processing according to the present embodiment will be described.

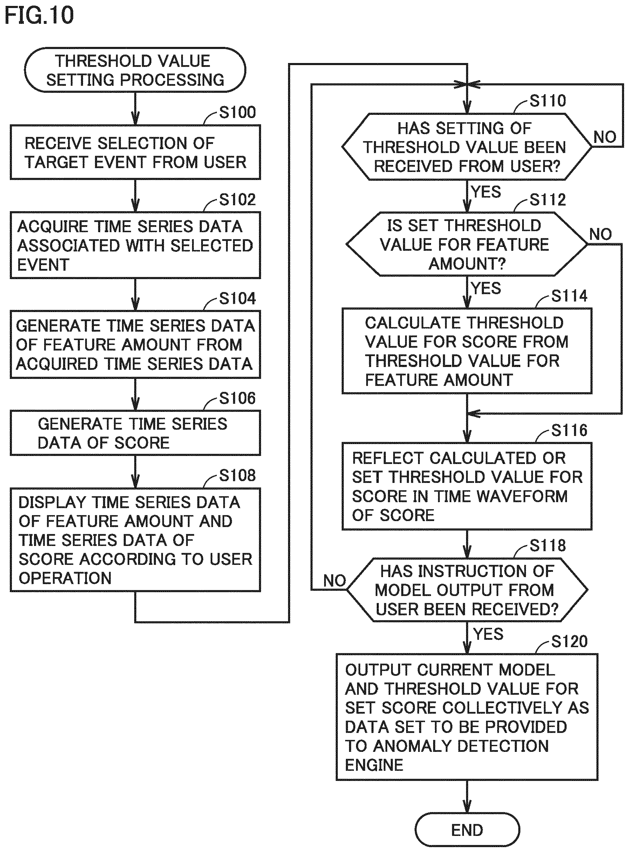

Fig. 10 is a flowchart showing the example of the processing procedure related to threshold value setting processing according to the present embodiment. Steps shown in Fig. 10 are typically realized by processor 202 of support device 200 executing model generation program 228 (Fig. 4). Model generation program 228 is an example of an information processing program executed by support device 200 that is a computer.

Note that model 160 for calculating the score for one or more feature amounts is assumed to be created in advance.

Referring to Fig. 10, support device 200 receives selection of a target event from the user (step S100). Then, support device 200 acquires the time series data associated with the selected event (step S102). For example, support device 200 may access control device 100 to acquire the time series data stored in TSDB 140, or may extract target time series data from the time series data acquired in advance by support device 200.

Subsequently, support device 200 generates time series data of the feature amount from the acquired time series data (step S104), and generates time series data of the score by inputting the generated time series data to model 160 corresponding to the target event (step S106).

Support device 200 displays the time series data of the feature amount and the time series data of the score according to the user operation (step S108). That is, support device 200 displays a feature amount related to model 160 and a score calculated from the feature amount. The user sets one or more threshold values while referring to the time series data of the feature amount and/or the time series data of the score. Support device 200 receives setting of a threshold value for any of the feature amount and the score.

Upon receiving the setting of the threshold value from the user (YES in step S110), support device 200 determines whether the set threshold value is for the feature amount (step S112).

If the set threshold value is for the feature amount (YES in step S112), support device 200 calculates a threshold value for the score from the threshold value for the feature amount using a function that defines model 160 (step S114). In this manner, support device 200 calculates the threshold value for the score from the threshold value set for the feature amount.

If the set threshold value is not for the feature amount (that is, when the set threshold value is for the score) (NO in step S112), processing in step S114 is skipped.

Support device 200 reflects the calculated or set threshold value for the score in the time waveform of the score (step S 116).

Then, when support device 200 receives an instruction of model output from the user (YES in step S118), support device 200 outputs current model 160 and the threshold value for the set score collectively as a data set to be provided to anomaly detection engine 150 (step S120). That is, support device 200 outputs the threshold value set for the score or the threshold value for the score calculated from the threshold value set for the feature amount as the threshold value to be applied to model 160.

On the other hand, if the instruction of the model output has not been received from the user (NO in step S118), the processing in step S110 and thereafter is repeated.

The processing related to the threshold value setting processing is completed by the above procedure.

### <E. Functional configuration>

Next, an example of a functional configuration related to the threshold value setting processing according to the present embodiment will be described.

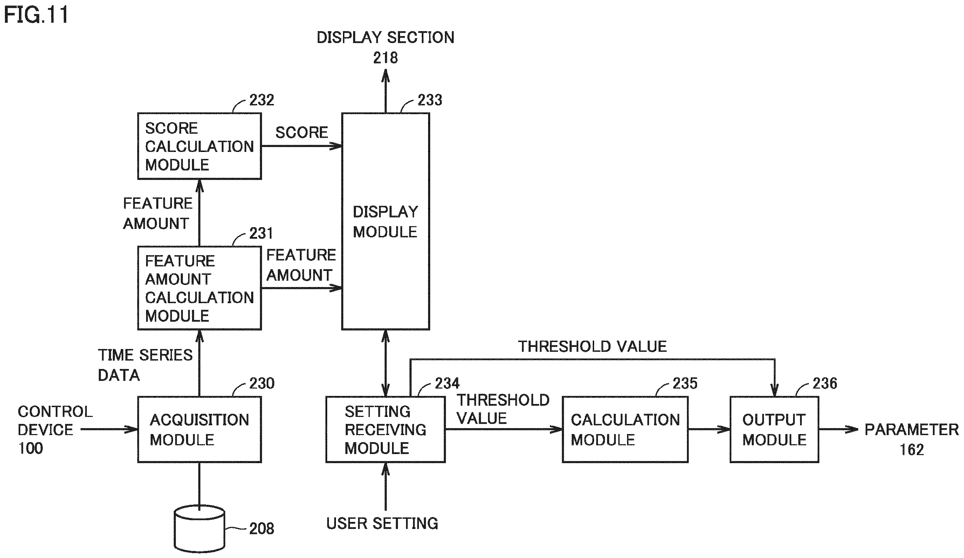

Fig. 11 is a block diagram illustrating the example of the functional configuration for realizing the threshold value setting processing according to the present embodiment. Blocks shown in Fig. 11 is typically realized by processor 202 of support device 200 executing model generation program 228 (Fig. 4).

Referring to Fig. 11, support device 200 includes, as functional configurations related to the threshold value setting processing, an acquisition module 230, a feature amount calculation module 231, a score calculation module 232, a display module 233, a setting receiving module 234, a threshold value calculation module 235, and an output module 236.

Acquisition module 230 obtains time series data associated with the selected event. Acquisition module 230 may cause support device 200 to access control device 100 to acquire the time series data stored in TSDB 140, or may use the time series data stored in secondary storage device 208 in advance.

Feature amount calculation module 231 calculates a feature amount from the acquired time series data. Feature amount calculation module 231 may calculate a feature amount for each frame and generate time series data of the feature amount.

Score calculation module 232 calculates a score from the feature amount or the time series data of the feature amount. Score calculation module 232 may calculate a score for each frame and generate time series data of the score.

Display module 233 displays the feature amount related to model 160 and the score calculated from the feature amount on display section 218.

Setting receiving module 234 receives setting of a threshold value for any of the feature amount and the score.

Threshold value calculation module 235 calculates a threshold value for the score from the threshold value set for the feature amount.

Output module 236 outputs the threshold value set for the score or the threshold value for the score calculated from the threshold value set for the feature amount as the threshold value (parameter 162) to be applied to model 160.

### <F. Modified examples>

In the above description, the configuration example in which support device 200 mainly executes the threshold value setting processing has been described. However, the threshold value setting processing may be realized by cooperation between support device 200 and another device. This may be implemented by a device different from support device 200 (for example, computing resources on the cloud). That is, any hardware may be used to implement the threshold value setting processing according to the present embodiment.

### <G. Appendix>

The present embodiment described above includes the following technical ideas.

### [Configuration 1]

An information processing device (200) connected to a control device (100) configured to control a control target, the control device comprising a trained model (160) for receiving a feature amount (152) calculated from information collected from the control target to output a score (154), and a threshold value (162) for determining the score, the information processing device comprising:
display means (233, 218) configured to display a feature amount related to the trained model and a score calculated from the feature amount;
receiving means (234) configured to receive setting of a threshold value for any of the feature amount and the score;
calculation means (235) configured to calculate a threshold value (283, 284) for the score from the threshold value (273, 274) set for the feature amount; and
output means (236) configured to output, as a threshold value to be applied to the trained model, any of the threshold value set for the score and the threshold value for the score calculated from the threshold value set for the feature amount.

### [Configuration 2]

The information processing device according to configuration 1, wherein the display means is configured to display a time waveform (271) of the feature amount and a time waveform (281) of the score side by side.

### [Configuration 3]

The information processing device according to configuration 1 or 2, wherein the calculation means is configured to calculate the threshold value for the score from the threshold value set for the feature amount using a function defining the trained model.

### [Configuration 4]

The information processing device according to any one of configurations 1 to 3, wherein
the trained model is configured to output a score from a plurality of feature amounts, and
the calculation means is configured to calculate the threshold value for the score from a threshold value set for each of the plurality of feature amounts.

### [Configuration 5]

The information processing device according to configuration 4, wherein the display means is configured to display time waveforms (271A, 271B) of the plurality of feature amounts side by side.

### [Configuration 6]

The information processing device according to configuration 4, wherein on two-dimensional coordinates associated with two feature amounts, the display means is configured to plot and display each of the feature amounts, and display a threshold value for the score in a form of a contour line (291).

### [Configuration 7]

The information processing device according to configuration 4, wherein on three-dimensional coordinates associated with three feature amounts, the display means is configured to plot and display each of the feature amounts, and display a coordinate point group corresponding to a set score (298).

### [Configuration 8]

The information processing device according to any one of configurations 1 to 7, wherein the output means is configured to output a plurality of threshold values.

### [Configuration 9]

An information processing program (228) executed by a computer (200) connected to a control device (100) configured to control a control target, the control device including a trained model (160) for receiving a feature amount (152) calculated from information collected from the control target to output a score (154), and a threshold value (162) for determining the score, the information processing program causes the computer to perform:
displaying a feature amount related to the trained model and a score calculated from the feature amount (S108);
receiving setting of a threshold value for any of the feature amount and the score (S 110);
calculating a threshold value for the score from the threshold value set for the feature amount (S114); and
outputting, as a threshold value to be applied to the trained model, any of the threshold value set for the score and the threshold value for the score calculated from the threshold value set for the feature amount (S120).

### [Configuration 10]

An information processing method executed by a computer (200) connected to a control device (100) configured to control a control target, the control device including a trained model (160) for receiving a feature amount (152) calculated from information collected from the control target to output a score (154), and a threshold value (162) for determining the score, the information processing method comprising:
displaying a feature amount related to the trained model and a score calculated from the feature amount (S108);
receiving setting of a threshold value for any of the feature amount and the score (S110);
calculating a threshold value for the score from the threshold value set for the feature amount (S114); and
outputting, as a threshold value to be applied to the trained model, any of the threshold value set for the score and the threshold value for the score calculated from the threshold value set for the feature amount (S120).

### <H. Advantages>

According to support device 200 of the present embodiment, threshold values can be set to both the feature amount and the score. In a case where a threshold value is set for the feature amount, the threshold value is converted into a threshold value for the score. The threshold value for the score is output regardless of whether the threshold value is set for the feature amount or the score.

As described above, according to support device 200 of the present embodiment, the threshold value can be set to either of the feature amount and the score with respect to the event that needs to be detected, and therefore it is possible to easily output model 160 and parameter 162 for realizing the anomaly detection.

Normally, a frequency at which anomaly of the detection target can occur is low, and the threshold value has to be set as an initial value on the basis only of data to which a normal label is given or on the basis of data to which a slight abnormal label is given. However, according to support device 200 of the present embodiment, as the threshold value may be set to the feature amount or the score that can be easily determined, even a user with little specialized knowledge can relatively easily set the appropriate threshold value.

The embodiment disclosed herein should be considered to be illustrative in all respects and not restrictive. The scope of the present invention is defined by the claims, instead of the descriptions stated above, and it is intended that meanings equivalent to the claims and all modifications within the scope are included.

### REFERENCE SIGNS LIST

1: control system, 152, 296, 297: feature amount, 2, 4: field bus, 6: upper network, 10: field device group, 12: remote I/O device, 14: relay group, 16, 124: I/O unit, 18: servo driver, 20: servomotor, 30: data collection phase, 32: data analysis phase, 34: operating phase, 100: control device, 102, 202: processor, 104: chip set, 106, 206: main storage device, 108, 208: secondary storage device, 110: upper network controller, 112, 212: USB controller, 114: memory card interface, 116: memory card, 118, 120: field bus controller, 122: internal bus controller, 130: PLC engine, 131: system program, 132: user program, 134: library, 136: data management section, 142: time series data, 150: anomaly detection engine, 154: score, 156, TH_{ch}, TH_{sc}: threshold value, 158: detection result, 160: model, 162: parameter, 200: support device, 204: optical drive, 205: recording medium, 214: network controller, 216: input section, 218: display section, 220: bus, 222: OS, 224: interface program, 226: development program, 228: model generation program, 230: acquisition module, 231, 260: feature amount calculation module, 232: score calculation module, 233: display module, 234: setting receiving module, 235: calculation module, 236: output module, 240: data mining tool, 242: feature amount generation processing, 244: feature amount selection processing, 246: model generation processing, 248: threshold value setting processing, 250: model generation tool, 252: model update processing, 254: threshold value adjustment processing, 262: determination module, 270, 270A, 270B, 270C: feature amount display screen, 271: feature amount display region, 272, 282: histogram display region, 273, 283: first threshold value, 274, 284: second threshold value, 275, 285: slider, 280: score display screen, 281, 291, 298: score display region, 290: user interface screen, 292: feature amount selection area, 293, 294, 299: setting area, 295: contour line, 400: server, 500: display device

## Claims

1. An information processing device connected to a control device configured to control a control target, the control device comprising a trained model for receiving a feature amount calculated from information collected from the control target to output a score, and a threshold value for determining the score, the information processing device comprising:
display means configured to display a feature amount related to the trained model and a score calculated from the feature amount;
receiving means configured to receive setting of a threshold value for any of the feature amount and the score;
calculation means configured to calculate a threshold value for the score from the threshold value set for the feature amount; and
output means configured to output, as a threshold value to be applied to the trained model, any of the threshold value set for the score and the threshold value for the score calculated from the threshold value set for the feature amount.

2. The information processing device according to claim 1, wherein the display means is configured to display a time waveform of the feature amount and a time waveform of the score side by side.

3. The information processing device according to claim 1 or 2, wherein the calculation means is configured to calculate the threshold value for the score from the threshold value set for the feature amount using a function defining the trained model.

4. The information processing device according to any one of claims 1 to 3, wherein
the trained model is configured to output a score from a plurality of feature amounts, and
the calculation means is configured to calculate the threshold value for the score from a threshold value set for each of the plurality of feature amounts.

5. The information processing device according to claim 4, wherein the display means is configured to display time waveforms of the plurality of feature amounts side by side.

6. The information processing device according to claim 4, wherein on two-dimensional coordinates associated with two feature amounts, the display means is configured to plot and display each of the feature amounts, and display a threshold value for the score in a form of a contour line.

7. The information processing device according to claim 4, wherein on three-dimensional coordinates associated with three feature amounts, the display means is configured to plot and display each of the feature amounts, and display a coordinate point group corresponding to a set score.

8. The information processing device according to any one of claims 1 to 7, wherein the output means is configured to output a plurality of threshold values.

9. An information processing program executed by a computer connected to a control device configured to control a control target, the control device including a trained model for receiving a feature amount calculated from information collected from the control target to output a score, and a threshold value for determining the score, the information processing program causes the computer to perform:
displaying a feature amount related to the trained model and a score calculated from the feature amount;
receiving setting of a threshold value for any of the feature amount and the score;
calculating a threshold value for the score from the threshold value set for the feature amount; and
outputting, as a threshold value to be applied to the trained model, any of the threshold value set for the score and the threshold value for the score calculated from the threshold value set for the feature amount.

10. An information processing method executed by a computer connected to a control device configured to control a control target, the control device including a trained model for receiving a feature amount calculated from information collected from the control target to output a score, and a threshold value for determining the score, the information processing method comprising:
displaying a feature amount related to the trained model and a score calculated from the feature amount;
receiving setting of a threshold value for any of the feature amount and the score;
calculating a threshold value for the score from the threshold value set for the feature amount; and
outputting, as a threshold value to be applied to the trained model, any of the threshold value set for the score and the threshold value for the score calculated from the threshold value set for the feature amount.
